# FASCICULE DE BREVET EUROPEEN

(11) **EP 3 248 379 B1**
(45) Date de publication et mention de la délivrance du brevet: **24.10.2018**
(21) Numéro de dépôt: 16702180.7
(22) Date de dépôt: 08.01.2016
(51) Int. Cl.: H04N 21/266, H04N 21/4623, H04N 21/239

(54) **PROCÉDÉ DE DIFFUSION D'UN CONTENU MULTIMÉDIA PROTÉGÉ**
VERFAHREN ZUR AUSSTRAHLUNG VON GESCHÜTZTEN MULTIMEDIAINHALTEN
METHOD FOR BROADCASTING PROTECTED MULTIMEDIA CONTENTS

(30) Priorité: 20.01.2015 FR 1550453
(43) Date de publication de la demande: 29.11.2017
(73) Titulaire: Viaccess, 92057 Paris La Défense Cedex (FR)
(72) Inventeur: PHIRMIS, Mathieu, 92160 Antony (FR)
(74) Mandataire: Colombo, Michel
(86) Numéro de dépôt international: PCT/FR2016/050032
(87) Numéro de publication internationale: WO 2016/116681

(56) Documents cités:
- EP-A1- 2 317 767
- WO-A1-2009/094502
- WO-A2-2005/091635
- FR-A1- 2 835 371
- US-A1- 2010 131 973

## Description

L'invention concerne un procédé de diffusion d'un contenu multimédia protégé par des droits d'accès à des terminaux mécaniquement indépendants les uns des autres et raccordés à un même serveur de droits d'accès par l'intermédiaire d'un réseau grande distance de transmission d'informations. Elle a également pour objet un support d'enregistrement d'informations ainsi qu'un serveur de droits d'accès pour la mise en oeuvre de ce procédé.

Le procédé considéré peut être mis en oeuvre dans tout système de fourniture en ligne de contenus multimédias protégés dans lequel une tête de réseau assure la protection des contenus et leur transmission à une pluralité de terminaux.

### TERMINOLOGIE

Avant de poursuivre la description de cette demande de brevet, on définit maintenant la terminologie utilisée par la suite.

Accéder à un contenu multimédia protégé, signifie :
- charger en mémoire des fragments successifs du contenu multimédia, puis
- en lever la protection, à la volée alors qu'on le reçoit, puis
- le décoder, puis
- le transmettre à un appareil multimédia apte à le jouer, l'enregistrer, ou en faire toute autre utilisation offerte par le service de fourniture de contenus multimédias protégés.

Ici, par « lever la protection à la volée », on désigne le fait que les fragments du contenu multimédia sont traités au fur et à mesure de leur réception, sans attendre que le contenu multimédia complet, c'est-à-dire l'ensemble de ses fragments, ait été entièrement reçu.

Les contenus multimédia sont typiquement :
- des contenus audiovisuels, par exemple des programmes de télévision,
- des contenus audio seulement, par exemple un programme radiophonique, ou
- plus généralement, tout contenu numérique contenant de la vidéo et/ou de l'audio tel qu'une application informatique, un jeu, un diaporama, une image ou tout ensemble de données.

Parmi ces contenus multimédia, on considère plus particulièrement dans la suite des contenus multimédia dits temporels. Un contenu multimédia temporel est un contenu multimédia dont le jeu est une succession dans le temps de sons, dans le cas d'un contenu temporel audio, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composantes temporelles interactives temporellement synchronisées avec les sons ou les images.

Le contenu multimédia protégé transmis est diffusé en continu après avoir été protégé, par exemple, par un système d'accès conditionnel plus connu sous l'acronyme CAS (Conditional Access System). Par la suite, la terminologie du domaine des systèmes d'accès conditionnel est utilisée. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995.

Une liaison point-à-point est une liaison « unicast ». On désigne également ici par le terme liaison point-à-multipoints une liaison choisie dans le groupe composé d'une liaison de télédiffusion, plus connue sous les termes de liaison « broadcast », et d'une liaison multidiffusion, plus connue sous le terme de liaison « multicast ». La liaison point-à-point est une liaison bidirectionnelle. La liaison point-à-multipoints est une liaison unidirectionnelle de l'émetteur vers les récepteurs.

Par « réseau hybride », on désigne un réseau dans lequel :
- une tête de réseau diffuse, a l'aide d'une liaison point-à-multipoint, à un ensemble de terminaux, les droits d'accès nécessaires pour accéder au contenu multimédia, et en plus
- il est possible, notamment à l'initiative des terminaux, d'établir une liaison point-à-point entre chaque terminal et la tête de réseau.

Les termes d'embrouillage (« scrambling » en anglais) et de désembrouillage (« descrambling » en anglais) sont utilisés pour le contenu multimédia protégé par un CAS, comme synonymes des termes de chiffrement et de déchiffrement, qui restent utilisés pour les autres données, comme notamment les mots de contrôle et clés.

Les droits d'accès sont des données qui autorisent un terminal à accéder au contenu multimédia protégé. Typiquement, les droits d'accès comportent donc au moins une clé de déchiffrement permettant de désembrouiller le contenu multimédia protégé ou les données nécessaires au désembrouillage du contenu multimédia protégé. Ils peuvent en outre comporter d'autres droits acquis par le terminal, suite, par exemple, à la souscription d'un abonnement ou à l'achat de séances par un utilisateur du terminal, dits droits complémentaires dans la suite. Si le terminal ne possède pas les droits d'accès nécessaires, le terminal inhibe l'accès au contenu multimédia. Pour cela, généralement, le contenu multimédia n'est pas désembrouillé ou n'est pas désembrouillé correctement. Au contraire, si le terminal possède les droits d'accès nécessaires, il désembrouille le contenu multimédia pour obtenir un contenu multimédia en clair.

Ici, par « en clair », on désigne le fait que le contenu multimédia n'a plus besoin d'être déchiffré pour être joué, par un appareil multimédia, de façon directement perceptible et intelligible par un être humain.

Par « appareil multimédia », on désigne en outre tout dispositif apte à jouer le contenu multimédia en clair, tel qu'un téléviseur ou un lecteur multimédia.

### ETAT DE LA TECHNIQUE

Le déposant connaît des procédés de diffusion d'un contenu multimédia protégé à des terminaux raccordés à un même serveur de droits d'accès par l'intermédiaire d'un réseau grande distance de transmission d'informations. Dans ces procédés connus :
- le terminal envoie, au serveur de droits d'accès, une requête de droits d'accès pour recevoir les droits d'accès l'autorisant à accéder au contenu multimédia,
- en réponse à la requête de droits d'accès, le serveur de droits d'accès ajoute un identifiant du terminal dans une liste de diffusion,
- le serveur de droits d'accès diffuse, à intervalles prédéterminés, chaque nouveau droit d'accès au contenu multimédia diffusé, seulement aux terminaux dont l'identifiant figure dans la liste de diffusion et sans attendre pour cela que ces terminaux aient requis ce nouveau droit d'accès en envoyant une nouvelle requête de droits d'accès,
- en réponse à la réception de chaque droit d'accès, le terminal accède au contenu multimédia diffusé et, en absence de réception du droit d'accès, le terminal inhibe l'accès au contenu multimédia diffusé,
- à un instant quelconque, le terminal bascule, indépendamment des autres terminaux :
   - d'un état prêt dans lequel le terminal est capable d'envoyer, par l'intermédiaire d'une liaison point-à-point, la requête de droits d'accès, et de recevoir le droit d'accès requis,
   - vers un état occupé dans lequel le terminal est incapable d'envoyer, par l'intermédiaire de la liaison point-à-point, la requête de droits d'accès ou de recevoir le droits d'accès .

Dans le cas du contenu multimédia protégé par un CAS, les droits d'accès sont contenus dans des messages EMM (Entitlement Management Message). Plus précisément, un message EMM contient un droit d'accès DAᵢ. Ce droit d'accès DAᵢ contient typiquement un cryptogramme K_{S}*(Kᵢ) d'une clé d'exploitation K_{S} chiffrée avec une clé Kᵢ propre à un terminal Tᵢ. Ce droit d'accès DAᵢ est spécifique au terminal Tᵢ puisque seul ce terminal Tᵢ possède la clé Kᵢ et peut donc déchiffrer le cryptogramme K_{S}*(Kᵢ) pour obtenir la clé K_{S} qui lui permet d'accéder au contenu multimédia protégé. En particulier, même si le droit d'accès DAᵢ est reçu par d'autres terminaux, ces autres terminaux ne peuvent pas l'exploiter puisqu'ils n'ont pas la clé Kᵢ. Ceci renforce la sécurité du procédé de diffusion du contenu multimédia protégé. Par contre, le serveur de droits d'accès doit préparer et envoyer autant de droits d'accès spécifiques DAᵢ qu'il y a de terminaux différents qui souhaitent accéder à ce contenu multimédia protégé. Étant donné que le nombre de terminaux peut être très grand, par exemple supérieur à 10 000 ou 1 000 000, cela consomme une quantité importante de bande passante dans le réseau de transmission.

Pour remédier à ce problème, la demande WO2009094502A1 propose de répartir les terminaux en plusieurs groupes et d'affecter à chaque groupe de terminaux une plage horaire spécifique. Ensuite, le serveur de droits d'accès diffuse les droits d'accès DAᵢ pour un groupe de terminaux donné uniquement pendant la plage horaire associée à ce groupe de terminaux. Cela permet effectivement de réduire la bande passante nécessaire pour envoyer les droits d'accès DAᵢ aux terminaux. Par contre, cette solution impose de former et de gérer des groupes de terminaux, ce qui n'est pas toujours souhaitable.

De l'état de la technique est également connu de :
- EP2317767A1,
- FR2835371A1,
- US2010/131973A1,
- WO2005/091635A2.

L'invention vise donc, dans le contexte des réseaux hybrides, à proposer une autre solution pour réduire la bande passante utilisée par la transmission des droits d'accès DAᵢ aux terminaux mais sans que cette solution impose de former et de gérer des groupes de terminaux. Elle a donc pour objet un procédé de diffusion d'un contenu multimédia protégé conforme à la revendication 1.

Dans le procédé ci-dessus, la transmission des droits d'accès aux terminaux qui sont dans leur état occupé est automatiquement arrêtée. Cela permet donc de réduire le nombre de droits d'accès DAᵢ transmis et donc de limiter la bande passante utilisée pour cette transmission. Dans ce procédé, la diminution de la bande passante nécessaire pour transmettre les droits d'accès est obtenue sans qu'il soit pour cela nécessaire de regrouper les terminaux en groupes, comme cela est décrit dans la demande WO2009094502A1.

Les modes de réalisation de ce procédé de diffusion peuvent comporter une ou plusieurs des caractéristiques des revendications dépendantes.

Ces modes de réalisation de ce procédé de diffusion présentent en outre les avantages suivants :
- L'utilisation de profils d'occupation des terminaux pour ajouter automatiquement un terminal à la liste de diffusion avant même que ce terminal n'envoie au serveur de droits d'accès une requête de droit d'accès, permet d'améliorer la qualité de service. En effet, lorsqu'un terminal bascule de son état occupé vers son état prêt pendant une plage horaire où il est d'habitude, avec une probabilité supérieure à un seuil prédéterminé, dans son état prêt, le terminal reçoit directement les droits d'accès nécessaires pour accéder au contenu multimédia protégé sans même qu'il ait besoin de les requérir auprès du serveur de droits d'accès, et donc d'attendre de les recevoir en réponse à sa requête.
- Utiliser les messages d'état pour actualiser la valeur de l'indicateur de probabilité associé à chaque plage horaire du profil d'occupation d'un terminal permet de mettre à jour automatiquement ce profil d'occupation et donc de l'adapter en permanence à l'utilisation du terminal.
- Retirer automatiquement l'identifiant d'un terminal de la liste de diffusion uniquement après l'absence de réception de plusieurs messages d'état attendus consécutifs permet d'accroître la robustesse du procédé de diffusion vis-à-vis de la non-réception, accidentelle d'un tel message d'état par le serveur de droits d'accès. Par exemple, la non-réception accidentelle peut être causée par une impossibilité temporaire d'établir une liaison point-à-point entre le terminal et la tête de réseau. Cela évite qu'à chaque fois qu'un message d'état n'est pas reçu par le serveur de droits d'accès, cela conduise systématiquement au retrait de l'identifiant d'un terminal de la liste de diffusion.
- Utiliser des droits d'accès spécifiques à chaque terminal permet de renforcer la sécurité du procédé de diffusion puisque même si ces droits d'accès sont interceptés ou reçus par d'autres terminaux, ils ne sont pas exploitables par ces autres terminaux.
- Utiliser le message d'accusé de réception des droits d'accès en tant que message d'état permet à l'aide d'un même message à la fois d'accuser réception du droit d'accès et, en même temps, d'indiquer au serveur d'accès que le terminal est dans son état prêt. De plus, il est ainsi possible de mettre en oeuvre le procédé revendiqué sans avoir à modifier les terminaux existants.
- Arrêter la diffusion cyclique du même droit d'accès dès que le serveur de droit d'accès a reçu un accusé de réception pour ce droit d'accès permet de réduire encore plus la bande passante nécessaire à la transmission des droits d'accès.
- Retirer automatiquement et systématiquement de la liste de diffusion l'identifiant d'un terminal pour lequel l'écart entre une date courante et la dernière date enregistrée à laquelle un message d'état a été reçu pour ce terminal a franchi un seuil prédéterminé, permet de réduire encore la bande passante nécessaire à la transmission des droits d'accès.

L'invention a également pour objet un support d'enregistrement d'informations comportant des instructions pour la mise en oeuvre du procédé ci-dessus de diffusion d'un contenu multimédia protégé, lorsque ces instructions sont exécutées par un calculateur électronique.

L'invention a également pour objet un serveur de droits d'accès pour la mise en oeuvre du procédé revendiqué.

L'invention sera mieux comprise à la lecture de la description qui va suivre, donnée uniquement à titre d'exemple non limitatif, et faite en référence aux dessins sur lesquels :
- la figure 1 est une représentation schématique d'un système de diffusion d'un contenu multimédia protégé,
- les figures 2 et 3 sont des illustrations schématiques de tables utilisées dans le système de la figure 1 ; et
- la figure 4 est un organigramme d'un procédé de diffusion de contenus multimédias à l'aide du système de la figure 1.

Dans ces figures, les mêmes références sont utilisées pour désigner les mêmes éléments. Dans la suite de cette description, les caractéristiques bien connues de l'homme du métier ne sont pas décrites en détail.

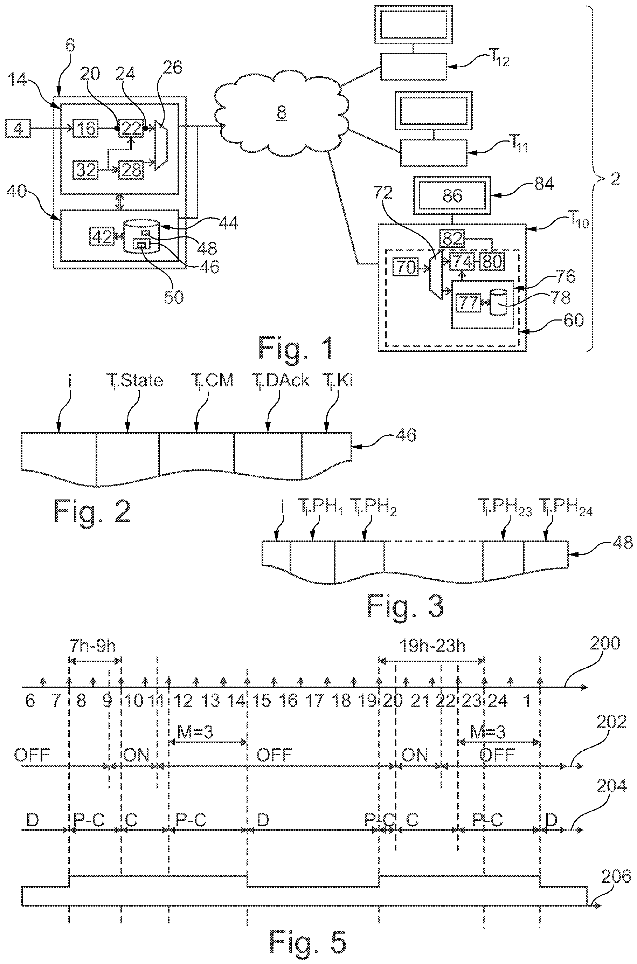

La figure 1 représente un système 2 de diffusion de contenus multimédias protégés. Les contenus multimédias diffusés sont des contenus multimédias temporels. Par exemple, un contenu multimédia correspond à une séquence d'un programme audiovisuel tel qu'une émission de télévision ou un film.

Les contenus multimédias en clair sont générés par une ou plusieurs sources 4 et transmis à une tête de réseau 6. La tête 6 diffuse les contenus multimédias simultanément vers une multitude de terminaux de réception à travers un réseau 8 de transmission d'informations. Typiquement, le nombre de terminaux est supérieur à 1000 ou 10 000. Pour simplifier la figure 1, seuls trois terminaux T₁₀, T₁₁ et T₁₂ sont représentés. Dans la suite de cette description, chaque terminal du système 2 est identifié par une référence Tᵢ, où l'indice « i » identifie de façon unique le terminal Tᵢ du système 2 parmi l'ensemble des terminaux de ce système.

Le réseau 8 est un réseau grande distance de transmission d'informations à travers lequel :
- la tête de réseau 6 établit une liaison point-à-multipoints entre elle et un groupe quelconque de terminaux du système 2, et
- une liaison point-à-point entre l'un quelconque des terminaux du système 2 et la tête de réseau 6 peut être établie.

Par exemple, le réseau 8 est le réseau Internet également connu sous le terme de « toile d'araignée mondiale » (« World Wide Web » en anglais).

La tête 6 comprend un dispositif 14 de diffusion, à travers le réseau 8, des contenus multimédias protégés vers les terminaux. Ce dispositif 14 comporte un encodeur 16 qui compresse les contenus multimédias qu'il reçoit. L'encodeur 16 traite des contenus multimédias numériques. Par exemple, cet encodeur fonctionne conformément à la norme MPEG2 (Moving Picture Expert Group - 2) ou la norme UIT-T H264.

Les contenus multimédias compressés sont dirigés vers une entrée 20 d'un embrouilleur 22. L'embrouilleur 22 protège les contenus multimédias. Pour cela, ici, l'embrouilleur 22 embrouille chaque contenu multimédia compressé pour conditionner sa visualisation à certaines conditions d'accès telles que l'achat d'un titre d'accès par les utilisateurs des terminaux de réception. Les contenus multimédias embrouillés sont restitués sur une sortie 24 raccordée à l'entrée d'un multiplexeur 26.

Plus précisément, l'embrouilleur 22 embrouille chaque contenu multimédia compressé à l'aide d'un mot de contrôle CWₜ qui lui est fourni, ainsi qu'à un système 28 d'accès conditionnel, par un générateur 32 de clés. Le système 28 est plus connu sous l'acronyme CAS (Conditional Access System). L'indice « t » est un numéro d'ordre identifiant la cryptopériode CPₜ du contenu multimédia embrouillée avec ce mot de contrôle CWₜ. Ici, toutes les cryptopériodes CPₜ ont la même durée. Une cryptopériode de contenu désigne donc ici, par abus de langage, une séquence de contenu dont la durée de jeu est une durée prédéterminée, cette durée prédéterminée étant définie comme étant la cryptopériode du système. Par exemple, cette durée est comprise entre 5s et 1min et, souvent, égale à 10s.

Typiquement, cet embrouillage est conforme à une norme telle que la norme DVB-CSA (Digital Video Broadcasting - Common Scrambling Algorithm), ISMA Cryp (Internet Streaming Media Alliance Cryp), SRTP (Secure Real-time Transport Protocol), AES (Advanced Encryption Standard), etc.

Le système 28 génère des messages ECMₜ (Entitlement Control Message) contenant au moins un cryptogramme CWₜ* du mot de contrôle CWₜ généré par le générateur 32 et utilisé par l'embrouilleur 22 pour embrouiller la cryptopériode CPt. Ce cryptogramme CWₜ* est obtenu en chiffrant le mot de contrôle CWₜ avec une clé d'exploitation Kₛ. Il est typiquement construit par le système 28. Le système 28 insère aussi, généralement, dans chaque ECMₜ des conditions d'accès CA destinées à être comparées à des droits d'accès acquis par l'utilisateur pour autoriser ou non l'accès au contenu multimédia protégé. Ces messages ECMt et les contenus multimédias embrouillés sont multiplexés par le multiplexeur 26 avant d'être transmis sur le réseau 8. La clé d'exploitation Kₛ utilisée par le système 28 est la même pour tous les terminaux. Elle est modifiée après une durée d'utilisation prédéterminée supérieure à au moins deux et, typiquement, au moins dix, cent, mille ou dix-mille cryptopériodes CPₜ successives. Par exemple, cette durée est supérieure à 5 min, 30 min ou 1h et, généralement, inférieure à 36h ou 24h.

A titre d'illustration, ici, l'embrouillage et le multiplexage des contenus multimédias est conforme au protocole DVB-CSA (ETSI TS 103 197).

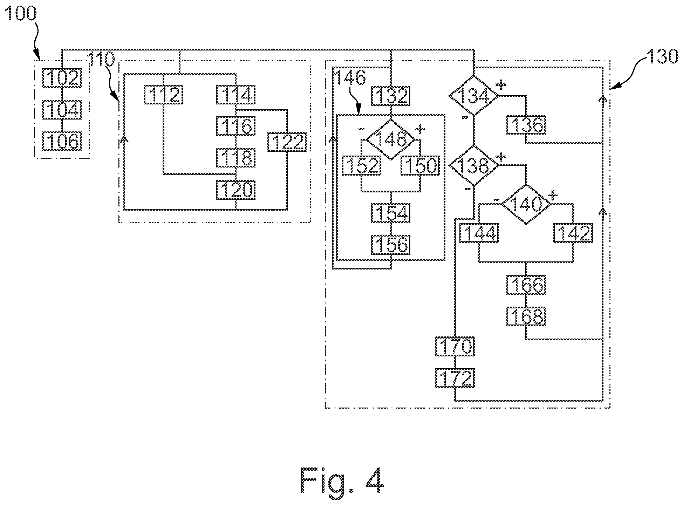

La tête 6 comporte également un serveur 40 de droits d'accès également directement connecté au réseau 8. Ici, ce serveur 40 prépare et diffuse les droits d'accès DAᵢ requis par chacun des terminaux Tᵢ pour accéder au contenu multimédia protégé. Pour cela, dans ce mode de réalisation, le serveur 40 transmet les droits d'accès DAᵢ préparés au système 28. Le système 28 les incorpore alors dans un message EMM (Entitlement Management Message) qui est transmis au multiplexeur 26. A cet effet, le serveur 40 comporte un calculateur électronique 42 programmable apte à exécuter des instructions enregistrées sur un support d'enregistrement d'informations. Ici, le serveur 40 comporte une mémoire 44 contenant les instructions nécessaires pour l'exécution du procédé de la figure 4.

Dans ce mode de réalisation, la mémoire 44 comporte aussi :
- une table 46 contenant les informations nécessaires à la gestion de la diffusion des droits d'accès vers chacun des terminaux, et
- une table 48 contenant des profils d'occupation pour chaque terminal Tᵢ.

De plus, la table 46 contient une liste 50 de diffusion. Cette liste 50 contient l'identifiant de chaque terminal vers lequel les droits d'accès doivent être diffusés.

Pour simplifier, on considère que les terminaux T₁₀ à T₁₂ sont identiques et seul le terminal T₁₀ est décrit plus en détail.

La tête 6 de réseau peut, ou non, occuper un unique site et, notamment, le dispositif 14 et le serveur 40 être ou non distants. Dans tous les cas, une liaison point à point peut être établie entre un terminal et la tête 6 globalement considérée, c'est-à-dire l'un au moins des sites de la tête 6, laquelle liaison point à point permet une communication bidirectionnelle entre le terminal et le serveur 40.

Le terminal T₁₀ comporte au moins une ligne 60 de désembrouillage. La ligne 60 désembrouille le contenu multimédia pour l'afficher sur un afficheur 84 ou pour l'enregistrer à l'aide d'un enregistreur.

La ligne 60 comprend un récepteur 70 des contenus multimédias diffusés sur le réseau 8. Ce récepteur 70 est raccordé à l'entrée d'un démultiplexeur 72 qui transmet d'un côté le contenu multimédia reçu à un désembrouilleur 74 et d'un autre côté les messages ECMₜ et EMM à un processeur 76 de sécurité.

Le désembrouilleur 74 désembrouille la cryptopériode CPₜ du contenu multimédia embrouillé à partir du mot de contrôle CWₜ transmis par le processeur 76. Le contenu multimédia désembrouillé est transmis à un décodeur 80 qui le décode et le décompresse. Le contenu multimédia décodé est transmis à une carte graphique 82 et/ou à une carte son qui pilote le jeu de ce contenu multimédia sur l'appareil 84 équipé d'un écran 86 ou d'un haut-parleur. L'appareil 84 joue en clair le contenu multimédia sur l'écran 86.

Le processeur 76 traite des informations confidentielles telles que des clés cryptographiques. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 10. Par exemple, à cet effet, le processeur 76 est une carte à puce.

Le processeur 76 est réalisé à l'aide d'un calculateur électronique 77 programmable apte à exécuter des instructions enregistrées sur un support d'enregistrement d'informations. A cet effet, le processeur 76 comporte une mémoire 78 contenant les instructions nécessaires pour l'exécution du procédé de la figure 4.

Le terminal T₁₀ peut basculer, de façon indépendante des autres terminaux, entre un état prêt et un état occupé. Dans l'état prêt, le terminal T₁₀ est capable d'accomplir toutes les opérations nécessaires pour accéder au contenu multimédia. En particulier, dans l'état prêt, le terminal T₁₀ est capable :
- de recevoir le contenu multimédia protégé et les droits d'accès diffusés par le dispositif 14 sur une liaison point-à-multipoints,
- d'établir une liaison point-à-point à travers le réseau 8 avec le serveur 40 pour requérir la réception d'un droit d'accès lui permettant d'accéder au contenu multimédia transmis par le dispositif 20, et
- d'envoyer sur une liaison point-à-point un accusé de réception au serveur 40 à chaque fois qu'il a correctement reçu le droit d'accès transmis par la tête 6.

Dans l'état occupé, le terminal T₁₀ est dépourvu d'au moins l'une des capacités ci-dessus. Par exemple, l'état occupé correspond à un état où le terminal est éteint ou en veille ou encore déconnecté du réseau 8. Ainsi, dans l'état éteint ou en veille le terminal consomme typiquement dix ou cent fois moins d'énergie électrique que dans l'état prêt. Par exemple, sa consommation électrique est inférieure à 1W. Le terminal T₁₀ bascule de son état prêt vers son état occupé, par exemple, automatiquement après une durée prédéterminée pendant laquelle aucune interaction avec l'utilisateur ne s'est produite. Le terminal T₁₀ peut aussi basculer vers son état occupé en réponse à la réception d'une commande de l'utilisateur, ou à l'initiative du réseau 8. De même, généralement, le terminal T₁₀ bascule de l'état occupé vers l'état prêt en réponse à la réception d'une commande d'allumage transmise par l'utilisateur, ou à l'initiative du réseau 8.

La figure 2 représente plus en détail un exemple de réalisation de la table 46. Dans cet exemple, la table 46 contient une ligne par terminal du système 2.

Sur les figures 2 et 3, les lignes ondulées indiquent que seule une partie des tables 46 et 48 ont été représentées. Dans ces figures 2 et 3, chaque colonne contient un champ particulier. Ces colonnes sont identifiées sur ces figures par le nom du champ qu'elles contiennent.

La table 46 associe à chaque terminal Tᵢ quatre champs nommés respectivement i, Tᵢ.State, Tᵢ.CM et Tᵢ.DAck. Le champ Tᵢ.State caractérise l'état du terminal Tᵢ, du point de vue de la tête 6. Le champ Tᵢ.State peut prendre trois valeurs distinctes :
- « C » pour indiquer que ce terminal Tᵢ est considéré par la tête 6 comme se trouvant dans son état prêt,
- « D » pour indiquer que le terminal Tᵢ est considéré par la tête 6 comme se trouvant dans son état occupé, et
- « PC » pour indiquer que l'état du terminal est considéré comme incertain par la tête 6.

Le champ « i » contient l'identifiant du terminal Tᵢ.

Le champ Tᵢ.CM contient la valeur d'un compteur qui est incrémenté par pas régulier. Ici, le pas régulier est égal à 1. Par la suite, ce champ Tᵢ.CM est également appelé compteur Tᵢ.CM.

Le champ Tᵢ.DAck contient la dernière date à laquelle le serveur 40 a établi avec certitude que le terminal Tᵢ était dans son état prêt.

Par la suite, la liste 50 est la liste des identifiants de tous les terminaux contenus dans la table 46 dont le champ Tᵢ.State prend une valeur comprise dans le groupe composé de la valeur « C » et de la valeur « PC ». Cette liste 50 ne comprend donc pas les identifiants des terminaux Tᵢ pour lesquels la valeur du champ Tᵢ.State est égal à « D ».

À titre d'illustration uniquement, la table 46 comprend également un champ supplémentaire Tᵢ.Kᵢ contenant une clé cryptographique Kᵢ propre au terminal Tᵢ. Ainsi, chaque terminal du système 2 possède une clé Kᵢ différente de celle des autres terminaux du même système. Par exemple, la clé Kᵢ est pré-enregistrée dans la mémoire 78 de chaque terminal. Par contre, dans ce mode de réalisation, seul le serveur 40 et le terminal Tᵢ connaissent cette clé Kᵢ.

La figure 3 représente plus en détail un exemple possible de table 48. La table 48 associe à chaque terminal Tᵢ du système 2 un profil d'occupation. À cet effet, la table 48 contient :
- une ligne par terminal Tᵢ du système 2,
- une colonne « i » contenant l'identifiant du terminal Tᵢ, et
- une colonne pour chaque plage horaire PHⱼ prédéfinie contenant la valeur d'un champ Tᵢ.PHⱼ.

Ici, l'indice « j » identifie une plage horaire prédéfinie parmi l'ensemble des plages horaires prédéfinies utilisées dans le système 2. Les plages horaires PHⱼ divisent une période continue d'observation en plusieurs plages horaires. Typiquement, le nombre de plages horaires PHⱼ est strictement supérieur à deux et, de préférence, supérieur à quatre ou huit. Ce nombre est également généralement inférieur à 50 ou 100.

Ici, la période d'observation est égale à une journée, c'est-à-dire à 24 heures et la durée de chaque plage horaire PHⱼ est égale à une heure. Il existe donc 24 plages PHⱼ notées respectivement de PH₁ à PH₂₄. Les heures de début et de fin de chaque plage horaire PHⱼ sont connues. Par exemple, la plage PH₁ débute à 0h et finit à 1h du matin. La plage PH₂ débute à 1h du matin et finit à 2h du matin. Ainsi, chaque plage PHⱼ débute à (j-1) heure(s) et finit à j (modulo 24) heure(s).

La valeur du champ Tᵢ.PHⱼ augmente au fur et à mesure que la probabilité que le terminal Tᵢ soit dans l'état prêt pendant la plage horaire PHⱼ augmente. Pour cela, dans ce mode de réalisation, le champ Tᵢ.PHⱼ est incrémenté et, en alternance, décrémenté d'un pas régulier comme décrit en référence à la figure 4. Ici ce pas régulier est égal à un.

Le fonctionnement du système 2 va maintenant être décrit à l'aide du procédé de la figure 4.

Lorsqu'un terminal Tᵢ dont l'identifiant ne figure pas déjà dans la liste 50 souhaite recevoir ses droits d'accès DAᵢ pour accéder au contenu multimédia protégé actuellement diffusé par le dispositif 14, il procède à une phase 100 d'inscription dans la liste 50.

Pour cela, lors d'une étape 102, le terminal Tᵢ établit, à travers le réseau 8, une liaison point à point avec le serveur 40.

Ensuite, lors d'une étape 104, il envoie au serveur 40 à travers cette liaison point à point, une requête de droit d'accès.

Uniquement si l'utilisateur a acquis des droits qui l'autorisent à accéder à ce contenu multimédia, alors, lors d'une étape 106, en réponse, le serveur 40 ajoute l'identifiant i de ce terminal Tᵢ à la liste 50. Plus précisément, pour cela, le serveur 40 affecte, dans la table 46, la valeur « C » au champ Tᵢ.State. Lors de cette étape 106, le serveur 40 initialise également la valeur du compteur Tᵢ.CM à zéro et la valeur du champ Tᵢ.DAck à la date courante. La date courante est obtenue par le serveur 40, par exemple, à partir d'une horloge interne à ce serveur 40 ou alors en interrogeant une horloge externe à travers le réseau 8.

À l'issue de la phase 100, l'identifiant i du terminal Tᵢ a donc été ajouté à la liste 50.

En parallèle, le dispositif 14 procède en permanence à une phase 110 de diffusion du contenu multimédia protégé.

Pour cela, lors d'une étape 112, le dispositif 14 diffuse le contenu multimédia embrouillé multiplexé avec les messages ECMₜ préparés par le système 28 et les messages EMM contenant les droits d'accès DAᵢ préparés par le serveur 40. Ce multiplex est diffusé simultanément vers tous les terminaux du système 2 à travers le réseau 8. Pour cela, typiquement, le dispositif 14 utilise une liaison « broadcast » entre lui et l'ensemble des terminaux du système 2. Ainsi, tous les terminaux peuvent recevoir le contenu multimédia embrouillé et les messages ECMₜ et EMM à partir du moment où ils sont dans leur état prêt.

En parallèle, lors d'une étape 114, à chaque fois que la clé Kₛ est modifiée, le serveur 40 prépare de nouveaux droits d'accès DAᵢ seulement pour tous les terminaux dont l'identifiant figure dans la liste 50. Pour cela, pour chaque terminal dont l'identifiant figure dans la liste 50, le serveur 40 chiffre notamment la clé Kₛ avec la clé Kᵢ de ce terminal Tᵢ obtenue à partir de la table 46 pour construire le cryptogramme Kₛ*(Kᵢ). Typiquement, l'algorithme de chiffrement de la clé Kₛ mis en oeuvre par le serveur 40 est un algorithme de chiffrement symétrique. Le droit d'accès DAᵢ ainsi préparé est spécifique au terminal Tᵢ puisqu'il contient le cryptogramme K_{S}*(Kᵢ), que seul ce terminal Tᵢ peut déchiffrer correctement. Ensuite, les droits d'accès DAᵢ préparés sont transmis au système 28. Le système 28 diffuse périodiquement ces droits d'accès DAᵢ. Par exemple, la transmission du droit d'accès DAᵢ est réalisée en l'insérant dans un message EMM et en diffusant périodiquement ce message EMM. Ce droit d'accès DAᵢ, même s'il est reçu par d'autres terminaux que le terminal Tᵢ ne peut pas être exploité par ces autres terminaux pour accéder en clair au contenu multimédia. Dans ce mode de réalisation, seuls les droits d'accès DAᵢ permettent d'accéder au contenu multimédia protégé.

La période de diffusion des droits d'accès DAᵢ est typiquement supérieure à 5 min ou 30 min et généralement inférieure à 1 mois ou une semaine ou 24 heures ou au double de la durée des plages horaires. Ici, la durée de cette période est choisie égale à la durée des plages horaires PHⱼ, c'est-à-dire égale à une heure.

Lors d'une étape 116, si le terminal Tᵢ est dans son état prêt, il reçoit le contenu multimédia embrouillé multiplexé avec les messages ECMₜ et les messages EMM. Le démultiplexeur 72 transmet alors le contenu multimédia embrouillé au désembrouilleur 74 et les messages ECMₜ et EMM vers le processeur 76. En réponse à la réception de ce message EMM, le processeur 76 exploite le droit d'accès DAᵢ en déchiffrant le cryptogramme Kₛ*(Kᵢ) à l'aide de sa clé Kᵢ pour obtenir la clé Kₛ en clair. Ensuite, cette clé Kₛ en clair est par exemple enregistrée dans la mémoire 78.

Une fois ce travail achevé, lors d'une étape 118, le terminal Tᵢ établit une liaison point à point avec la tête 6, puis envoie un accusé de réception au serveur 40 par l'intermédiaire de cette liaison point à point. Ensuite, la liaison point à point est interrompue. En réponse, à chaque fois qu'un terminal Tᵢ accuse réception du droit d'accès DAᵢ, le serveur 40 suspend la diffusion de ce droit d'accès DAᵢ jusqu'à ce que ce droit d'accès DAᵢ requis pour accéder au contenu multimédia change. Dès qu'un nouveau droit d'accès DAᵢ est préparé pour ce terminal Tᵢ, il est alors de nouveau automatiquement diffusé vers ce terminal sans attendre que le terminal Tᵢ envoie pour cela une nouvelle requête de droit d'accès. Cela permet d'éviter de continuer d'envoyer le même droit d'accès DAᵢ au même terminal Tᵢ après que celui-ci ait déjà accusé réception de ce droit d'accès.

Lors d'une étape 120, le terminal Tᵢ accède au contenu multimédia protégé. Pour cela, le processeur 76 utilise la clé Kₛ enregistrée dans sa mémoire 78 pour déchiffrer les cryptogrammes CWₜ* contenus dans les messages ECMₜ reçus pour en extraire le mot de contrôle CWₜ en clair. Le mot de contrôle CWₜ en clair est transmis au désembrouilleur 74 qui l'utilise pour désembrouiller la cryptopériode CPₜ du contenu multimédia embrouillé. La suite du fonctionnement du terminal Tᵢ pour afficher en clair la cryptopériode CPₜ désembrouillée et décodée sur l'écran 86 a déjà précédemment été décrite et ne sera donc pas reprise ici.

Après l'étape 114, si le terminal Tᵢ est dans son état occupé, il ne reçoit pas le droit d'accès DAᵢ envoyé par le serveur 40 ou est incapable d'envoyer l'accusé de réception au serveur 40. Dans ce cas, il ne peut pas exécuter, au moins, l'étape 118. Ainsi, dans ce cas, le terminal Tᵢ n'envoie pas l'accusé de réception au serveur 40.

En parallèle des phases 100 et 110, le serveur 40 procède également à une phase 130 de gestion de l'état des terminaux ainsi qu'à la mise à jour automatique de la liste 50.

Lors d'une étape 132, à chaque fois que le serveur 40 reçoit d'un terminal Tᵢ un accusé de réception, il utilise ce message en tant que message d'état lui indiquant que ce terminal Tᵢ est dans l'état prêt. Ainsi, en réponse à la réception de cet accusé de réception, le serveur 40 affecte automatiquement la valeur « C » au champ Tᵢ.State associé à ce terminal Tᵢ par la table 46. De plus, il procède aux initialisations suivantes :
- il affecte au champ T_{i.}DAck la date courante,
- il affecte la valeur « 0 » au compteur Tᵢ.CM.

Ensuite, il procède à une étape 146 de mise à jour automatique du profil d'occupation du terminal Tᵢ contenu dans la table 48 et d'exploitation de ce profil.

L'étape 146 débute par une opération 148 lors de laquelle le serveur 40 compare la valeur du champ T_{i.}State à la valeur « C ».

Si la valeur du champ Tᵢ.State est égale à « C », le serveur 40 procède à une opération 150. Lors de l'opération 150, le serveur 40 incrémente de un la valeur du champ Tᵢ.PHⱼ, où la plage horaire PHⱼ est la plage horaire courante, c'est-à-dire celle qui contient l'heure courante. L'heure courante est par exemple obtenue à partir de l'horloge interne du serveur 40 ou par interrogation d'une horloge externe.

Dans le cas contraire, c'est-à-dire si la valeur du champ Tᵢ.State est égale à la valeur « PC » ou à la valeur « D » et seulement si la valeur du champ Tᵢ.PHⱼ est strictement supérieure à zéro, alors, lors d'une opération 152, le serveur 40 décrémente de un la valeur du champ Tᵢ.PHⱼ. Plus généralement, cette décrémentation se fait d'un pas égal ou non au pas d'incrémentation déjà décrit, et présentant les mêmes propriétés que lui. Comme lui, il est ici pris égal à 1.

Le serveur 40 associe également à chaque champ Tᵢ.PHⱼ, un indicateur I_{i,j}. La valeur « vrai » de cet indicateur I_{i,j} indique que la probabilité que le terminal Tᵢ soit dans l'état prêt pendant la plage horaire PHⱼ est importante. Dans le cas contraire, la valeur de cet indicateur I_{i,j} est égale à « faux ».

Après la mise à jour du champ Tᵢ.PHⱼ, lors d'une opération 154, le serveur 40 met à jour les indicateurs I_{i,j}. Ici, la valeur « vraie » est affectée à l'indicateur I_{i,j} :
- si la valeur du champ Tᵢ.PHⱼ est supérieure ou égale à un seuil SPH, et
- si la valeur du champ Tᵢ.PHⱼ₋₁ est supérieure au seuil SPH ou si la valeur du champ Tᵢ.PHⱼ₊₁ est supérieure au seuil SPH.

La valeur du seuil S_{PH} est prédéterminée. Par exemple, elle est supérieure ou égale à deux ou quatre et, généralement, inférieure à 50. Ici, la valeur du seuil SPH est égale à deux.

Autrement dit, on considère que la probabilité que le terminal Tᵢ soit dans l'état prêt est importante :
- si la probabilité que le terminal Tᵢ soit dans l'état prêt pendant la plage PHⱼ est importante, et
- si cette plage PHⱼ est contiguë à au moins une autre plage PHⱼ₋₁ ou PHⱼ₊₁ pendant laquelle il est aussi fortement probable que le terminal Tᵢ soit dans son état prêt.

Ensuite, lors d'une opération 156, si la valeur du champ Tᵢ.State est égale à « PC » ou « D » et si la plage horaire PHⱼ courante est associée à un indicateur I_{i,j} dont la valeur est « vraie », alors le serveur 40 affecte la valeur « PC » au champ Tᵢ.State. Dans le cas contraire, lors de l'étape 156, la valeur du champ Tᵢ.State est laissée inchangée.

Ainsi, à chaque fois que le serveur 40 reçoit un accusé de réception de la part d'un terminal Tᵢ, la valeur du champ Tᵢ.State associée à ce terminal Tᵢ est systématiquement basculée vers la valeur « C ».

En parallèle, lors d'une étape 134, à chaque fois que le serveur 40 envoie lors de l'étape 114 un droit d'accès DAᵢ à un terminal Tᵢ, il teste si la valeur du champ Tᵢ.State est égale à la valeur « C ». Dans l'affirmative, lors d'une étape 136, il fait immédiatement basculer le champ Tᵢ.State de la valeur « C » vers la valeur « PC » sans attendre l'accusé de réception que doit lui transmettre, en réponse, ce terminal Tᵢ lors de l'étape 118. Ensuite, le procédé retourne à l'étape 134. Ainsi, si le terminal Tᵢ est dans son état prêt, la valeur du champ Tᵢ.State est remise à la valeur « C » dès que l'accusé de réception envoyé par ce terminal Tᵢ est reçu par le serveur 40 lors de l'étape 132. Au contraire, si le terminal Tᵢ n'envoie aucun accusé de réception en réponse à l'envoi de ce droit d'accès DAᵢ, alors la valeur du champ Tᵢ.State reste égale à « PC » jusqu'au prochain envoi d'un droit d'accès DAᵢ pour ce terminal.

Dans le cas où la valeur du champ Tᵢ.State est différente de la valeur « C », le serveur 40 procède à une étape 138 lors de laquelle il compare la valeur du champ Tᵢ.State à la valeur « PC ».

Si la valeur du champ Tᵢ.State est égale à la valeur « PC » alors le serveur 40 procède à une étape 140.

Lors de l'étape 140, le serveur 40 compare la valeur du compteur Tᵢ.CM à un seuil prédéterminé M. Typiquement, M est un entier supérieur ou égal à deux et, généralement, inférieur ou égal à 20 ou 10. Ici, M est égal à trois.

Si la valeur du compteur Tᵢ.CM est supérieure ou égale à M, alors, lors d'une étape 142, le serveur 40 affecte la valeur « D » au champ Tᵢ.State dans la table 46. Cela exclut donc automatiquement ce terminal Tᵢ de la liste 50. Ainsi, à partir de ce moment-là, les droits d'accès DAᵢ pour ce terminal ne sont plus diffusés par le dispositif 14 vers ce terminal Tᵢ On limite ainsi la quantité d'informations transmises sur le réseau 8. Cela permet donc d'économiser de la bande passante.

Si, lors de l'étape 140, le serveur 40 détermine que la valeur du champ Tᵢ.CM est inférieure au seuil M, alors, lors d'une étape 144, il incrémente de un la valeur de ce champ Tᵢ.CM et enregistre la valeur incrémentée dans la table 46. Par contre, il n' affecte pas la valeur « D » au champ Tᵢ.State.

À l'issue de l'étape 142 ou 144, le serveur 40 exécute une étape 166 pour mettre à jour le profil d'occupation du terminal Tᵢ et pour exploiter ce profil. Cette étape 166 est identique à l'étape 146.

À l'issue de l'exécution de cette étape 166, la valeur du champ Tᵢ.State est égale à « PC » même si la valeur « D » lui avait été affectée lors de l'étape 142 si son profil d'occupation indique qu'il est fortement probable que ce terminal Tᵢ bascule vers son état prêt pendant la plage horaire PHⱼ courante.

Après l'étape 166, lors d'une étape 168, le serveur 40 calcule l'écart entre la date courante et la date contenue dans le champ Tᵢ.DAck. Si cet écart est supérieur à un seuil T_{off}, alors le serveur 40 affecte la valeur « D » au champ Tᵢ.State. Dans le cas contraire, la valeur du champ Tᵢ.State reste inchangée. Le seuil T_{off} est un seuil prédéterminé supérieur ou égal à la durée de M plages horaires PHⱼ, où M est le même seuil que celui définit précédemment pour le compteur Tᵢ.CM. Par exemple, le seuil T_{off} est supérieur à la durée d'au moins dix plages horaires PHⱼ. Ici, le seuil T_{off} est pris égal à 48 heures.

Après l'étape 168, le procédé retourne à l'étape 134.

À l'issue des étapes 140 à 168, la valeur du champ Tᵢ.State est égale à la valeur « PC » même si le terminal Tᵢ n'a pas envoyé d'accusé de réception au serveur 40 à condition que :
- la plage horaire PHⱼ courante soit marquée comme étant une plage horaire où il est très probable que le terminal Tᵢ bascule vers son état prêt, et
- l'absence d'envoi d'accusé de réception n'a pas duré plus que la valeur du seuil T_{off}.

Le fait de maintenir dans ces conditions la valeur du champ Tᵢ.State égale à la valeur « PC » permet de maintenir le terminal Tᵢ dans la liste 50 même si le serveur 40 ne sait pas avec certitude si ce terminal Tᵢ est dans son état prêt. Dès lors, si le terminal Tᵢ bascule de son état occupé vers son état prêt au milieu de la plage horaire PHⱼ associée à la valeur « vraie » de l'indicateur I_{i,j}, il n'a pas à exécuter la phase 100 d'inscription. L'identifiant du terminal Tᵢ est déjà dans la liste 50. On limite donc ainsi le nombre de requêtes de droit d'accès à traiter par le serveur 40 et l'on améliore la qualité de service.

À l'inverse, à l'issue de ces étapes 140 à 168, l'identifiant du terminal Tᵢ est automatiquement retiré de la liste 50 :
- s'il n'a pas envoyé d'accusé de réception en réponse aux M derniers envois de droit d'accès DAᵢ, et
- si la plage horaire PHⱼ courante est une plage horaire où la probabilité que le terminal Tᵢ soit dans l'état prêt n'est pas importante.

Le serveur 40 retire donc ainsi automatiquement de la liste 50 l'identifiant d'un terminal Tᵢ qui n'indique pas qu'il est dans l'état prêt pendant les plages horaires où la probabilité que ce terminal bascule vers son état prêt n'est pas importante. On remarquera que le serveur 40 retire également systématiquement l'identifiant d'un terminal Tᵢ de la liste 50 si celui-ci n'a pas envoyé d'accusé de réception pendant une durée supérieure à la valeur du seuil T_{off}.

Si lors de l'étape 138, le serveur 40 détermine que la valeur du champ Tᵢ.State est égale à la valeur « D », alors il procède à une étape 170. L'étape 170 est une étape de mise à jour et d'exploitation du profil d'occupation du terminal Tᵢ. Cette étape 170 est identique à l'étape 146.

L'étape 170 est systématiquement suivie d'une étape 172 identique à l'étape 168.

Ainsi, si la valeur du champ Tᵢ.State est égale à la valeur « D », celle-ci redevient automatiquement égale à la valeur « PC » à l'issue des étapes 170 et 172 uniquement si :
- la plage horaire PHⱼ courante est une plage horaire où la probabilité que le terminal Tᵢ bascule vers son état prêt est importante, et
- si le terminal Tᵢ a envoyé au moins un accusé de réception au serveur 40 après la limite « Date courante - T_{off} ».

La figure 5 représente un chronogramme illustrant le fonctionnement du serveur 40 et d'un terminal Tᵢ lorsque le procédé de la figure 4 est exécuté. Ce chronogramme comporte quatre axes horizontaux 200, 202, 204 et 206. L'axe 200 est gradué en heures. Sur cet axe, chaque flèche verticale représente le début d'une heure et donc le début d'une plage horaire PHⱼ.

L'axe 202 représente les périodes de temps pendant lesquelles le terminal Tᵢ est réellement dans l'état prêt et, en alternance, dans l'état occupé. Sur cet axe, chaque période de temps où le terminal Tᵢ est dans l'état occupé est représentée par une double flèche horizontale surplombée du symbole « OFF ». De façon similaire, chaque période de temps où le terminal Tᵢ est dans l'état prêt, est représentée par une double flèche horizontale surplombée du symbole « ON ». Le début et la fin de ces doubles flèches correspondent aux instants où le terminal Tᵢ bascule entre ces deux états.

L'axe 204 représente les périodes de temps pendant lesquelles la valeur du champ Tᵢ.State est égale à valeur « C », « PC » ou « D ». Comme pour l'axe 202, chaque période de temps est représentée par une double flèche horizontale. Lorsque cette double flèche est surplombée du symbole « D », il s'agit d'une période de temps où la valeur du champ Tᵢ.State est égale à la valeur « D ». Lorsque ces doubles flèches sont surplombées des symboles « PC » et « C », il s'agit d'une période de temps où les valeurs du champ Tᵢ.State sont égales, respectivement, aux valeurs « PC » et « C ».

L'axe 206 représente schématiquement sous la forme d'un bargraphe l'évolution au cours du temps de la bande passante utilisée par le serveur 40 pour envoyer aux terminaux les droits d'accès DAᵢ. Dans ce bargraphe, plus la barre est haute, plus la consommation de bande passante est importante.

L'évolution de la bande passante est représentée dans le cas particulier où :
- seules les plages horaires PH₇, PH₈, PH₁₉, PH₂₀, PH₂₁ et PH₂₂ sont associées à un indicateur I_{i,j} dont la valeur est égale à « vraie »,
- la valeur du champ T_{i.}DAck est initialement égale à la date courante correspondant au début de la plage PH₁, et
- la valeur du compteur Tᵢ.CM est initialement égale à zéro.

On suppose également que les droits d'accès DAᵢ sont envoyés au terminal Tᵢ une seule fois par plage horaire PHⱼ. Par exemple, au début de la plage horaire PHⱼ.

À 7h, la valeur du champ Tᵢ.State bascule automatiquement de la valeur « D » vers la valeur « PC » alors que le terminal Tᵢ n'est pas encore réellement dans l'état prêt. Cela est dû au fait que l'on se trouve au début de la plage horaire PH₇. Dès lors, lorsque vers 8h30, le terminal Tᵢ bascule de son état occupé vers son état prêt, il n'a pas besoin d'envoyer la requête de droit d'accès vers le serveur 40 pour recevoir les droits d'accès DAᵢ. Ces droits d'accès DAᵢ étaient déjà diffusés à son intention depuis 7h du matin.

Le terminal Tᵢ passe dans son état occupé vers 10h30 mais cela n'est détecté pour la première fois par le serveur 40 qu'à partir de 11h. À partir de cet instant, l'identifiant du terminal Tᵢ est maintenu dans la liste 50 pendant trois plages horaires successives PH₁₁, PH₁₂ et PH₁₃ avant d'en être retiré vers 14h. Dès lors, à partir de 14h, les droits d'accès DAᵢ ne sont plus ni préparés ni envoyés vers le terminal Tᵢ. Cela permet donc de diminuer la bande passante nécessaire pour transmettre ces droits d'accès DAᵢ vers l'ensemble des terminaux.

De nombreux autres modes de réalisation sont possibles. Par exemple, le réseau utilisé pour diffuser le contenu multimédia protégé peut être un réseau différent du réseau 8. Par exemple, il peut s'agir d'un réseau de transmission par satellite ou d'un réseau TNT (télévision numérique terrestre). La diffusion du contenu multimédia et des droits d'accès DAᵢ peut être réalisée en multicast plutôt qu'en broadcast.

Dans une autre variante, le contenu multimédia est diffusé sur un premier réseau et les droits d'accès DAᵢ sont diffusés sur un second réseau distinct. Dans ce cas, il n'est pas nécessaire que les deux réseaux permettent l'établissement de liaison point à point.

Le procédé de la figure 4 a été décrit dans le cas particulier où les contenus multimédias sont protégés par un système 28 d'accès conditionnel connu sous l'acronyme de CAS. Toutefois, ce qui a été précédemment décrit dans ce cas particulier s'applique également à la diffusion de contenus multimédias protégés par d'autres moyens que le système 28. Par exemple, le système 28 est remplacé par un système de gestion de droits numériques connu sous l'acronyme de DRM (digital rights management). Un système de DRM est en effet un système de protection de contenus multimédias. Le lecteur intéressé pourra, par exemple, en trouver une présentation plus complète dans le document : DRM Architecture, Draft version 2.0, OMA-DRM-ARCH-V2_0-20040518-D, Open Mobile Alliance, 18 mai 2004. Dans ce système de DRM, le chiffrement du contenu multimédia est généralement réalisé au moyen d'une clé de chiffrement, par un algorithme symétrique. Le droit d'accès qui permet d'accéder au contenu multimédia ainsi chiffré est typiquement transmis dans un message appelé une « licence ». De structure bien connue, une telle licence comporte au moins une clé, dite de contenu, nécessaire au déchiffrement du contenu multimédia protégé par l'algorithme de chiffrement symétrique. La clé de contenu est généralement insérée dans la licence sous forme d'un cryptogramme obtenu par chiffrement de la clé de contenu avec une clé de chiffrement, dite « de terminal », propre au terminal ou connue de lui. Pour accéder au contenu, le terminal extrait de la licence la clé de contenu, en déchiffrant son cryptogramme au moyen de sa clé de terminal. Ensuite, le désembrouilleur du terminal désembrouille, c'est-à-dire déchiffre, le contenu au moyen de la clé de contenu ainsi extraite de la licence, en levant ainsi la protection. Par exemple, le système de DRM est celui décrit dans la demande de brevet déposée sous le numéro FR1451666 le 2 mars 2014. Par analogie, dans ce dernier cas, la clé de contenu spécifique, la clé de contenu et la clé de terminal correspondent, respectivement, au mot de contrôle CWₜ et aux clés Kₛ et Kᵢ du système CAS décrit ici.

Un droit d'accès peut être rendu spécifique à un terminal sans utiliser de clé Kᵢ. Par exemple, le message EMM comporte un identifiant du terminal pour lequel il est destiné. Lors de la réception de ce message EMM par les terminaux, ceux-ci comparent leurs identifiants à celui contenu dans le message EMM reçu. S'il n'y a pas de correspondance entre ces identifiants, le terminal ne traite pas le message EMM. Seul le terminal dont l'identifiant correspond à l'identifiant contenu dans le message EMM reçu traite ce message. Dans ce cas, la clé Kₛ contenue dans le message EMM est par exemple chiffrée avec une clé K_{G} et non pas avec la clé Kᵢ du terminal Tᵢ. La clé K_{G} est par exemple une clé commune à un groupe restreint de plusieurs terminaux du système 2.

Dans une autre variante, la clé Kᵢ est commune à un groupe restreint de terminaux du système 2.

Dans une variante préférée, c'est le système 28 qui gère et utilise les clés Kᵢ. Dans cette variante, le système 28 reçoit du serveur 40 les identifiants des terminaux appartenant à la liste 50 et pour lesquels il faut construire et diffuser des droits d'accès DAᵢ. Ensuite, pour chacun des identifiants de terminaux reçus et seulement pour ces identifiants, le système 28 construit le droit d'accès DAᵢ et, en particulier, le cryptogramme Kₛ*Kᵢ, puis l'incorpore dans un message EMM diffusé à destination du terminal Tᵢ. Dans cette variante, le serveur 40 ne gère que les droits complémentaires des terminaux et la liste 50 mais ne construit pas lui-même les cryptogrammes Kₛ*Kᵢ contenus dans les droits d'accès DAᵢ. Il transmet en effet par exemple les droits complémentaires des terminaux au système 28, lequel construit les cryptogrammes Kₛ*Kᵢ et les droits d'accès DAᵢ.

L'utilisation du compteur Tᵢ.CM peut être omise. Dans ce cas, le champ Tᵢ.State bascule de la valeur « PC » vers la valeur « D » dès la première absence de réception d'un accusé de réception.

Dans une autre variante, seules deux valeurs sont utilisées pour le champ Tᵢ.State à savoir les valeurs « C » et « D ». Dans ce cas, toutes les opérations du procédé de la figure 4 qui utilisent la valeur « PC » sont omises.

D'autres modes de réalisation du profil d'occupation sont possibles. Par exemple, la période d'observation divisée en plages horaires peut s'étendre sur plus d'une journée. Par exemple, cette période d'observation peut être égale à une semaine ou à un mois. La durée des plages horaires peut être modifiée. Par exemple, elles peuvent être plus courtes qu'une heure ou au contraire, plus longues. Typiquement, la durée d'une plage horaire est comprise entre une minute et 24h et, de préférence, entre 5min et 3h ou entre 30min et 3h. Les différentes plages horaires peuvent aussi avoir des durées différentes les unes des autres. Par exemple, les plages horaires sont plus courtes aux moments de grande écoute et plus longues au moment de faible écoute comme par exemple durant la nuit.

Les profils d'occupation peuvent aussi être construits et gérés différemment. Par exemple, en variante, l'utilisateur indique lui-même les plages horaires où il a l'habitude d'utiliser son terminal. Ces plages horaires sont ensuite enregistrées par le serveur 40 dans la table 48. Par la suite, ces plages horaires ne sont jamais automatiquement mises à jour. Ainsi, le procédé de la figure 4 peut être simplifié car toutes les étapes qui provoquent la mise à jour automatique du profil d'occupation sont omises. D'autres méthodes pour construire automatiquement le profil d'occupation des terminaux sont également possibles. Par exemple, en variante, le profil d'occupation du terminal Tᵢ est construit automatiquement en tenant compte des instants où ce terminal Tᵢ bascule entre ses états prêt et occupé mais aussi à partir des instants où les autres terminaux basculent en parallèle, entre leurs états prêt et occupé.

Dans une autre variante, chaque champ Tᵢ.PHⱼ contient la probabilité que le terminal Tᵢ soit dans l'état prêt pendant la plage horaire PHⱼ. Pour cela, à chaque début d'une plage horaire PHⱼ, le serveur 40 incrémente de « un » un compteur TPHⱼ. Le compteur TPHⱼ contient donc le nombre de fois où la plage horaire PHⱼ a été rencontrée. En parallèle, le serveur 40 incrémente un compteur Tᵢ.PPHⱼ à chaque fois que le terminal Tᵢ est dans son état prêt pendant la plage horaire PHⱼ. Ensuite, la valeur du champ Tᵢ.PHⱼ est obtenue en divisant la valeur du compteur Tᵢ.PPHⱼ par la valeur du compteur TPHⱼ. Dans cette variante, le seuil S_{PH} est typiquement pris supérieur ou égal à 50 % de chance que le terminal Tᵢ soit dans l'état prêt. De préférence, les compteurs TPHⱼ et Tᵢ.PPHⱼ sont mis à jour en tenant compte uniquement des données contenues dans une fenêtre glissante.

Dans une variante simplifiée, la construction et la gestion des profils d'occupation pour chaque terminal est omise. Dans ce cas, toutes les opérations du procédé de la figure 4 qui utilisent un profil d'occupation sont omises.

Le nombre de plages horaires contiguës à prendre en compte pour faire passer l'indicateur I_{i,j} à la valeur « vraie » peut être supérieur ou égal à deux ou au contraire égal à un. Dans ce dernier cas, l'indicateur I_{i,j} prend la valeur « vraie » dès que la valeur du champ Tᵢ.PHⱼ est supérieure au seuil SPH.

En variante, pour connaître l'état d'un terminal Tᵢ, le serveur 40 envoie une requête d'état à ce terminal Tᵢ et le terminal Tᵢ répond à cette requête en envoyant au serveur 40, par l'intermédiaire d'une liaison point-à-point, un message d'état indiquant qu'il est dans son état prêt. Si le terminal n'est pas dans son état prêt, il est incapable d'envoyer ce message d'état en réponse à la requête d'état. Dans ce mode de réalisation, la requête d'état est typiquement un message différent du message contenant les droits d'accès DAᵢ transmis à ce terminal. La requête d'état est transmise par l'intermédiaire d'une liaison point-à-point ou point-à-multipoint, à des instants prédéterminés ou déterminés en fonction du profil d'occupation.

Dans les modes de réalisation décrit précédemment, l'événement en réponse auquel le terminal envoie un message d'état est un message transmis depuis la tête 6 vers le terminal. Toutefois, cet événement peut aussi être l'occurrence d'un instant prédéterminé. Par exemple, dans une autre variante, tant que le terminal Tᵢ est dans son état prêt, il envoie à intervalles réguliers, par l'intermédiaire d'une liaison point-à-point, un message d'état au serveur 40. Dans ce mode de réalisation, le message d'état n'est donc pas transmis en réponse à une requête ou à un message envoyé par le serveur 40. Le serveur 40 traite alors ces messages d'état comme décrit précédemment. En particulier, le compteur Tᵢ.CM est incrémenté de un à chaque fois qu'aucun message d'état n'est reçu à l'instant prédéterminé où un tel message d'état aurait dû être reçu si le terminal Tᵢ était dans son état prêt.

Les étapes 168 et 172 peuvent être omises.

A chaque fois qu'un accusé de réception est reçu de la part du terminal Tᵢ, la date courante est enregistrée dans le champ Tᵢ.DAck. Dès lors, la date contenue dans le champ Tᵢ.DAck peut être utilisée en tant que date courante pour identifier la plage horaire courante lors de l'exécution de l'étape 146.

En variante, à chaque fois qu'un terminal Tᵢ accuse réception du droit d'accès DAᵢ, la diffusion de ce droit d'accès DAᵢ n'est pas suspendue jusqu'à ce que ce droit d'accès DAᵢ requis pour accéder au contenu multimédia change. Dès lors, le même droit d'accès DAᵢ est diffusé périodiquement vers le terminal Tᵢ tant que l'identifiant de ce terminal figure dans la liste 50.

Le procédé décrit ici peut être combiné avec le procédé décrit dans la demande WO2009094502A1. Dans ce cas, pendant chaque plage horaire où les droits d'accès DAᵢ sont uniquement préparés et diffusés vers un groupe restreint de terminaux, le serveur 40 retire automatiquement de ce groupe restreint, les terminaux qui sont dans l'état occupé et qui donc n'envoient pas de messages d'état.

## Revendications

1. Procédé de diffusion d'un contenu multimédia protégé par des droits d'accès à des terminaux mécaniquement indépendants les uns des autres et raccordés à un même serveur de droits d'accès par l'intermédiaire d'un réseau grande distance de transmission d'informations, dans lequel :
- le terminal envoie (104), au serveur de droits d'accès, une requête de droits d'accès pour recevoir les droits d'accès l'autorisant à accéder au contenu multimédia,
- en réponse à la requête de droits d'accès, le serveur de droits d'accès ajoute (106) un identifiant du terminal dans une liste de diffusion,
- le serveur de droits d'accès diffuse (114), à intervalles prédéterminés, chaque nouveau droit d'accès au contenu multimédia diffusé, seulement aux terminaux dont l'identifiant figure dans la liste de diffusion et sans attendre pour cela que ces terminaux aient requis ce nouveau droit d'accès en envoyant une nouvelle requête de droits d'accès,
- en réponse à la réception de chaque droit d'accès, le terminal accède (120) au contenu multimédia diffusé et, en absence de réception du droit d'accès, le terminal inhibe l'accès au contenu multimédia diffusé,
- à un instant quelconque, le terminal bascule, indépendamment des autres terminaux :
• d'un état prêt dans lequel le terminal est capable d'envoyer, par l'intermédiaire d'une liaison point-à-point, la requête de droits d'accès et de recevoir le droit d'accès requis,
• vers un état occupé dans lequel le terminal est incapable d'envoyer, par l'intermédiaire de la liaison point-à-point, la requête de droits d'accès ou de recevoir le droits d'accès,
**caractérisé en ce que** :
- en réponse à un événement prédéterminé, le terminal envoie (118) au serveur de droits d'accès, par l'intermédiaire d'une liaison point-à-point, un message d'état indiquant au serveur de droits d'accès qu'il est dans son état prêt et, en alternance, n'envoie pas ce message d'état s'il est dans son état occupé, et
- en absence de réception du message d'état attendu en réponse à l'événement prédéterminé, le serveur de droits d'accès retire (166, 168, 170, 172) automatiquement l'identifiant de ce terminal de la liste de diffusion.

2. Procédé selon la revendication 1, dans lequel le procédé comporte :
- la mémorisation, pour chaque terminal, d'un profil d'occupation comportant des plages horaires et pour chaque plage horaire un indicateur de la probabilité que le terminal soit dans son état prêt pendant cette plage horaire, et
- pour chaque terminal et uniquement pour chaque plage horaire du profil d'occupation de ce terminal où l'indicateur correspond à une probabilité que ce terminal soit dans son état prêt supérieure à un seuil prédéterminé : au début de cette plage horaire, le serveur de droits d'accès ajoute (156) automatiquement l'identifiant de ce terminal dans la liste de diffusion sans attendre que ce terminal ait envoyé une requête de droits d'accès.

3. Procédé selon la revendication 2, dans lequel en réponse à la réception de chaque message d'état à l'instant prédéterminé, le serveur de droits d'accès incrémente (150) la valeur de l'indicateur associé à la plage horaire pendant laquelle ce message d'état a été reçu et, en alternance, en absence de réception de ce message d'état à l'instant prédéterminé, décrémente (152) la valeur de cet indicateur.

4. Procédé selon l'une quelconque des revendications précédentes, dans lequel en absence de réception d'un message d'état de la part d'un terminal, le serveur de droits d'accès incrémente (144) un compteur associé spécifiquement à ce terminal, puis retire (142) automatiquement l'identifiant de ce terminal de la liste de diffusion uniquement lorsque ce compteur a dépassé un seuil prédéterminé, et, en alternance, en cas de réception d'un message d'état de la part du terminal, ré-initialise le compteur.

5. Procédé selon l'une quelconque des revendications précédentes, dans lequel :
- le serveur de droits d'accès prépare (114) pour chaque terminal dont l'identifiant figure dans la liste de diffusion et seulement pour ces terminaux, un droit d'accès spécifique que seul ce terminal peut exploiter pour lever la protection du contenu multimédia protégé et ainsi accéder en clair à ce contenu multimédia, les autres terminaux étant incapables d'exploiter ce droit d'accès spécifique pour accéder en clair au contenu multimédia, et
- en réponse à la réception de chaque droit d'accès spécifique préparé pour ce terminal, le terminal accède (120) au contenu multimédia diffusé et, en absence de réception du droit d'accès spécifique, le terminal inhibe l'accès au contenu multimédia diffusé.

6. Procédé selon la revendication 5, dans lequel, tant que le terminal est dans son état prêt, seulement en réponse à la réception de chaque droit d'accès spécifique préparé pour ce terminal, le terminal envoie (118), par l'intermédiaire d'une liaison point-à-point, un accusé de réception au serveur de droit d'accès pour confirmer la réception de ce droit d'accès spécifique, et le serveur de droits d'accès utilise cet accusé de réception en tant que message d'état indiquant que le terminal est dans son état prêt.

7. Procédé selon la revendication 6, dans lequel le serveur de droits d'accès diffuse périodiquement le même droit d'accès tant qu'aucun accusé de réception de ce droit d'accès n'a été reçu et, en réponse à la réception de l'accusé de réception de ce droit d'accès, le serveur de droits interrompt la diffusion de ce droit d'accès.

8. Procédé selon l'une quelconque des revendications précédentes, dans lequel à chaque fois que le serveur de droits d'accès reçoit un message d'état d'un terminal, il enregistre la date à laquelle ce message d'état a été reçu, puis, en parallèle, le serveur de droit d'accès compare (168, 172), à intervalle régulier, un seuil prédéterminé à l'écart entre une date courante et la dernière date enregistrée à laquelle un message d'état a été reçu pour ce terminal et, seulement si ce seuil prédéterminé est franchi, le serveur de droit d'accès retire automatiquement et systématiquement l'identifiant de ce terminal de la liste de diffusion.

9. Support (44) d'enregistrement d'informations, **caractérisé en ce qu'**il comporte des instructions pour la mise en oeuvre d'un procédé de diffusion d'un contenu multimédia protégé conforme à l'une quelconque des revendications précédentes, lorsque ces instructions sont exécutées par un calculateur électronique conformément à la revendication 10.

10. Serveur de droit d'accès pour la mise en oeuvre d'un procédé conforme à l'une quelconque des revendications 1 à 8, dans lequel le serveur de droit d'accès comporte un calculateur électronique (42) programmé pour :
- recevoir une requête de droits d'accès envoyée par un terminal qui souhaite recevoir les droits d'accès l'autorisant à accéder au contenu multimédia,
- en réponse à la requête de droits d'accès reçue, ajouter un identifiant du terminal dans une liste de diffusion,
- diffuser, à intervalles prédéterminés, chaque nouveau droit d'accès au contenu multimédia diffusé, seulement aux terminaux dont l'identifiant figure dans la liste de diffusion et sans attendre pour cela que ces terminaux aient requis ce nouveau droit d'accès en envoyant une nouvelle requête de droits d'accès,
**caractérisé en ce que** le calculateur électronique (42) est également programmé pour :
- en réponse à un événement prédéterminé, recevoir de la part du terminal, par l'intermédiaire d'une liaison point-à-point, un message d'état indiquant au serveur de droits d'accès que ce terminal est dans son état prêt et, en alternance, l'absence de réception de ce message d'état si le terminal est dans son état occupé, et
- en réponse à l'absence de réception du message d'état attendu en réponse à l'événement prédéterminé, retirer automatiquement l'identifiant de ce terminal de la liste de diffusion.

## Patentansprüche

1. Verfahren zur Ausstrahlung eines durch Zugriffsrechte geschützten Multimedia-Inhalts an Endgeräte, die mechanisch voneinander unabhängig sind und über ein Fernnetz zur Informationsübertragung mit demselben Zugriffsrechte-Server verbunden sind, wobei:
- das Endgerät an den Zugriffsrechte-Server eine Zugriffsrechteanforderung sendet (104), um die Zugriffsrechte zu empfangen, die es berechtigen, auf den Multimedia-Inhalt zuzugreifen,
- der Zugriffsrechte-Server in Reaktion auf die Zugriffsrechteanforderung eine Kennung des Endgerätes zu einer Ausstrahlungsliste hinzufügt (106),
- der Zugriffsrechte-Server in vorbestimmten Zeitabständen jedes neue Zugriffsrecht auf den ausgestrahlten Multimedia-Inhalt nur an die Endgeräte ausstrahlt (114), deren Kennung in der Ausstrahlungsliste enthalten ist, und ohne hierfür darauf zu warten, dass diese Endgeräte dieses neue Zugriffsrecht durch Senden einer neuen Zugriffsrechteanforderung anfordern,
- in Reaktion auf den Empfang jedes Zugriffsrechtes das Endgerät auf den ausgestrahlten Multimedia-Inhalt zugreift (120) und beim Ausbleiben des Empfangs des Zugriffsrechtes das Endgerät den Zugriff auf den ausgestrahlten Multimedia-Inhalt verhindert,
- zu einem beliebigen Zeitpunkt das Endgerät, unabhängig von den anderen Endgeräten, umschaltet:
• aus einem Bereitschaftszustand, in welchem das Endgerät in der Lage ist, über eine Punkt-zu-Punkt-Verbindung die Zugriffsrechteanforderung zu senden und das angeforderte Zugriffsrecht zu empfangen,
• in einen Besetztzustand, in welchem das Endgerät nicht in der Lage ist, über die Punkt-zu-Punkt-Verbindung die Zugriffsrechteanforderung zu senden oder die Zugriffsrechte zu empfangen,
**dadurch gekennzeichnet, dass**:
- in Reaktion auf ein vorbestimmtes Ereignis das Endgerät an den Zugriffsrechte-Server über eine Punkt-zu-Punkt-Verbindung eine Zustandsnachricht sendet (118), die dem Zugriffsrechte-Server anzeigt, dass es sich in seinem Bereitschaftszustand befindet, und dagegen diese Zustandsnachricht nicht sendet, falls es sich in seinem Besetztzustand befindet, und
- beim Ausbleiben des Empfangs der in Reaktion auf das vorbestimmte Ereignis erwarteten Zustandsnachricht der Zugriffsrechte-Server automatisch die Kennung dieses Endgerätes aus der Ausstrahlungsliste entfernt (166, 168, 170, 172).

2. Verfahren nach Anspruch 1, wobei das Verfahren umfasst:
- die Speicherung, für jedes Endgerät, eines Belegungsprofils, welches Zeitbereiche und für jeden Zeitbereich einen Indikator der Wahrscheinlichkeit, dass sich das Endgerät während dieses Zeitbereichs in seinem Bereitschaftszustand befindet, umfasst, und
- für jedes Endgerät und ausschließlich für jeden Zeitbereich des Belegungsprofils dieses Endgerätes, für den der Indikator einer Wahrscheinlichkeit, dass sich das Endgerät in seinem Bereitschaftszustand befindet, entspricht, die größer als ein vorbestimmter Schwellenwert ist: dass der Zugriffsrechte-Server zu Beginn dieses Zeitbereichs automatisch die Kennung dieses Endgerätes zu der Ausstrahlungsliste hinzufügt (156), ohne darauf zu warten, dass dieses Endgerät eine Zugriffsrechteanforderung sendet.

3. Verfahren nach Anspruch 2, wobei in Reaktion auf den Empfang jeder Zustandsnachricht zu dem vorbestimmten Zeitpunkt der Zugriffsrechte-Server den Wert des Indikators inkrementiert (150), der dem Zeitbereich, während dem diese Zustandsnachricht empfangen worden ist, zugeordnet ist, und dagegen beim Ausbleiben des Empfangs dieser Zustandsnachricht zu dem vorbestimmten Zeitpunkt den Wert dieses Indikators dekrementiert (152).

4. Verfahren nach einem der vorhergehenden Ansprüche, wobei beim Ausbleiben des Empfangs einer Zustandsnachricht von einem Endgerät der Zugriffsrechte-Server einen Zähler inkrementiert (144), der speziell diesem Endgerät zugeordnet ist, und anschließend die Kennung dieses Endgerätes nur dann automatisch aus der Ausstrahlungsliste entfernt (142), wenn dieser Zähler einen vorbestimmten Schwellenwert überschritten hat, und dagegen im Falle des Empfangs einer Zustandsnachricht von dem Endgerät den Zähler neu initialisiert.

5. Verfahren nach einem der vorhergehenden Ansprüche, wobei:
- der Zugriffsrechte-Server für jedes Endgerät, dessen Kennung in der Ausstrahlungsliste enthalten ist, und nur für diese Endgeräte, ein spezifisches Zugriffsrecht bereitstellt (114), welches nur dieses Endgerät nutzen kann, um den Schutz des geschützten Multimedia-Inhalts aufzuheben und so unverschlüsselt auf diesen Multimedia-Inhalt zuzugreifen, während die anderen Endgeräte nicht in der Lage sind, dieses spezifische Zugriffsrecht zu nutzen, um unverschlüsselt auf den Multimedia-Inhalt zuzugreifen, und
- in Reaktion auf den Empfang jedes spezifischen Zugriffsrechtes, das für dieses Endgerät bereitgestellt wurde, das Endgerät auf den ausgestrahlten Multimedia-Inhalt zugreift (120) und beim Ausbleiben des Empfangs dieses spezifischen Zugriffsrechtes das Endgerät den Zugriff auf den ausgestrahlten Multimedia-Inhalt verhindert.

6. Verfahren nach Anspruch 5, wobei, solange sich das Endgerät in seinem Bereitschaftszustand befindet, das Endgerät nur in Reaktion auf den Empfang jedes spezifischen Zugriffsrechtes, das für dieses Endgerät bereitgestellt wurde, über eine Punkt-zu-Punkt-Verbindung eine Empfangsbestätigung an den Zugriffsrechte-Server sendet (118), um den Empfang dieses spezifischen Zugriffsrechtes zu bestätigen, und der Zugriffsrechte-Server diese Empfangsbestätigung als Zustandsnachricht verwendet, die anzeigt, dass sich das Endgerät in seinem Bereitschaftszustand befindet.

7. Verfahren nach Anspruch 6, wobei der Zugriffsrechte-Server periodisch dasselbe Zugriffsrecht ausstrahlt, solange keine Empfangsbestätigung dieses Zugriffsrechtes empfangen worden ist, und der Zugriffsrechte-Server in Reaktion auf den Empfang der Empfangsbestätigung dieses Zugriffsrechtes die Ausstrahlung dieses Zugriffsrechtes unterbricht.

8. Verfahren nach einem der vorhergehenden Ansprüche, wobei jedes Mal, wenn der Zugriffsrechte-Server eine Zustandsnachricht eines Endgerätes empfängt, er das Datum registriert, an dem diese Zustandsnachricht empfangen worden ist, und ferner, parallel dazu, der Zugriffsrechte-Server in regelmäßigen Zeitabständen einen vorbestimmten Schwellenwert mit dem Abstand zwischen einem aktuellen Datum und dem letzten registrierten Datum, an welchem eine Zustandsnachricht für dieses Endgerät empfangen worden ist, vergleicht (168, 172), und nur falls dieser Schwellenwert überschritten worden ist, der Zugriffsrechte-Server automatisch und systematisch die Kennung dieses Endgerätes aus der Ausstrahlungsliste entfernt.

9. Informationsaufzeichnungsmedium (44), **dadurch gekennzeichnet, dass** es Anweisungen für die Durchführung eines Verfahrens zur Ausstrahlung eines geschützten Multimedia-Inhalts gemäß einem der vorhergehende Ansprüche, wenn diese Anweisungen von einem elektronischen Rechner gemäß Anspruch 10 ausgeführt werden, umfasst.

10. Zugriffsrechte-Server für die Durchführung eines Verfahrens gemäß einem der Ansprüche 1 bis 8, wobei der Zugriffsrechte-Server einen elektronischen Rechner (42) umfasst, der dafür programmiert ist:
- eine Zugriffsrechteanforderung zu empfangen, die von einem Endgerät gesendet wurde, welches die Zugriffsrechte empfangen möchte, die es berechtigen, auf den Multimedia-Inhalt zuzugreifen,
- in Reaktion auf die empfangene Zugriffsrechteanforderung eine Kennung des Endgerätes zu einer Ausstrahlungsliste hinzuzufügen,
- in vorbestimmten Zeitabständen jedes neue Zugriffsrecht auf den ausgestrahlten Multimedia-Inhalt nur an die Endgeräte auszustrahlen, deren Kennung in der Ausstrahlungsliste enthalten ist, und ohne hierfür darauf zu warten, dass diese Endgeräte dieses neue Zugriffsrecht durch Senden einer neuen Zugriffsrechteanforderung anfordern,
**dadurch gekennzeichnet, dass** der elektronische Rechner (42) außerdem dafür programmiert ist:
- in Reaktion auf ein vorbestimmtes Ereignis von dem Endgerät über eine Punkt-zu-Punkt-Verbindung eine Zustandsnachricht zu empfangen, die dem Zugriffsrechte-Server anzeigt, dass sich dieses Endgerät in seinem Bereitschaftszustand befindet, wobei dagegen der Empfang dieser Zustandsnachricht ausbleibt, falls sich das Endgerät in seinem Besetztzustand befindet, und
- in Reaktion auf das Ausbleiben des Empfangs der in Reaktion auf das vorbestimmte Ereignis erwarteten Zustandsnachricht automatisch die Kennung dieses Endgerätes aus der Ausstrahlungsliste zu entfernen.

## Claims

1. Method for broadcasting a protected multimedia content by access rights to terminals which are mechanically independent of each other and connected to the same access rights server by way of a long-distance information transmission network, in which:
- the terminal sends (104), to the access rights server, an access rights request to receive the access rights authorizing it to access the multimedia content,
- in response to the access rights request, the access rights server adds (106) an identifier of the terminal to a broadcasting list,
- the access rights server broadcasts (114), at predetermined intervals, each new access right to the multimedia content broadcast only to the terminals whose identifier appears in the broadcasting list and without waiting for these terminals to have requested this new access right by sending a new access rights request,
- in response to the reception of each access right, the terminal accesses (120) the multimedia content broadcast and, in absence of receipt of the access right, the terminal prevents access to the multimedia content broadcast,
- at any given time, the terminal switches, independently of the other terminals:
• from a ready state in which the terminal is able to send, by means of a point-to-point connection, the access rights request, and to receive the requested access right,
• to an occupied state in which the terminal is unable to send, by means of the point-to-point connection, the access rights request or to receive the access right,
**characterized in that**:
- in response to a predetermined event, the terminal sends (118) to the access rights server, by means of a point-to-point connection, a status message telling the access rights server that it is in its ready state or alternately does not send this status message if it is in its occupied state, and
- in the absence of receiving the expected status message in response to the predetermined event, the access rights server automatically removes (166, 168, 170, 172) the identifier of this terminal from the broadcasting list.

2. Method according to Claim 1, wherein the method involves:
- the memorization, for each terminal, of an occupation profile containing time slots and for each time slot an indicator of the probability of the terminal being in its ready state during this time slot, and
- for each terminal and only for each time slot of the occupation profile of this terminal where the indicator corresponds to a probability that this terminal is in its ready state higher than a predetermined threshold: at the start of this time slot, the access rights server automatically adds (156) the identifier of this terminal to the broadcasting list without waiting for this terminal to have sent an access rights request.

3. Method according to Claim 2, wherein in response to the receiving of each status message at the predetermined time, the access rights server increments (150) the value of the indicator associated with the time slot during which this status message was received or alternately in the absence of receiving this status message at the predetermined time it decrements (152) the value of this indicator.

4. Method according to any one of the preceding claims, wherein in the absence of receiving a status message from a terminal, the access rights server increments (144) a counter associated specifically with this terminal, then automatically removes (142) the identifier of this terminal from the broadcasting list only when this counter has crossed a predetermined threshold or, alternately, in the event of receiving a status message from the terminal, reinitializes the counter.

5. Method according to any one of the preceding claims, wherein:
- the access rights server prepares (114) for each terminal whose identifier appears in the broadcasting list and only for these terminals, a specific access right which only this terminal may use to remove the protection from the protected multimedia content and thus access this multimedia content in clear, the other terminals being unable to use this specific access right to access the multimedia content in clear, and
- in response to the receiving of each specific access right prepared for this terminal, the terminal accesses (120) the multimedia content broadcast and, in the absence of receiving the specific access right, the terminal prevents access to the multimedia content broadcast.

6. Method according to Claim 5, wherein, as long as the terminal is in its ready state, only in response to the receiving of each specific access right prepared for this terminal, the terminal sends (118), by means of a point-to-point connection, a receipt acknowledgement to the access right server to confirm the receiving of this specific access right, and the access rights server uses this receipt acknowledgement as a status message indicating that the terminal is in its ready state.

7. Method according to Claim 6, wherein the access rights server periodically broadcasts the same access right for as long as no receipt acknowledgement of this access right has been received and, in response to the receiving of the receipt acknowledgement of this access right, the access rights server interrupts the broadcasting of this access right.

8. Method according to any one of the preceding claims, wherein whenever the access rights server receives a status message from a terminal, it records the date on which this status message was received, then in parallel with this the access right server compares (168, 172), at regular intervals, a predetermined threshold to the difference between a current date and the last recorded date on which a status message was received for this terminal, and only if this predetermined threshold has been crossed does the access right server automatically and systematically remove the identifier of this terminal from the broadcasting list.

9. Information recording medium (44), **characterized in that** it contains instructions to carry out a method for broadcasting a protected multimedia content according to any one of the preceding claims when these instructions are executed by an electronic computer in accordance with Claim 10.

10. Access right server to carry out a method according to any one of Claims 1 to 8, wherein the access right server comprises an electronic computer (42) programmed to:
- receive an access rights request sent by a terminal wishing to receive the access rights authorizing it to access the multimedia content,
- in response to the access rights request received, add an identifier of the terminal to a broadcasting list,
- broadcast, at predetermined intervals, each new access right to the multimedia content broadcast only to the terminals whose identifier appears in the broadcasting list and without waiting for these terminals to have requested this new access right by sending a new access rights request,
**characterized in that** the electronic computer (42) is likewise programmed to:
- in response to a predetermined event, receive from the terminal, by means of a point-to-point connection, a status message telling the access rights server that this terminal is in its ready state or alternately the receiving absence of this status message if the terminal is in its occupied state, and
- in response to the absence of receiving the expected status message in response to the predetermined event, automatically remove the identifier of this terminal from the broadcasting list.
